(19) Europäisches Patentamt / European Patent Office / Office européen des brevets

(11) **EP 1 653 643 B1**

(12) **EUROPEAN PATENT SPECIFICATION**

(45) Date of publication and mention
of the grant of the patent:
**19.03.2008 Bulletin 2008/12**

(51) Int Cl.:
***H04J 3/06*** (2006.01)

(21) Application number: **04025575.4**

(22) Date of filing: **27.10.2004**

(54) **Method and system for time synchronisation in a distributed communications network**

Verfahren und Anlage zur Zeitsynchronisation in einem verteilten Kommunikationsnetzwerk

Procédé et dispositif de la synchronisation de temps dans un réseau de communication distribué

(84) Designated Contracting States:
**AT BE BG CH CY CZ DE DK EE ES FI FR GB GR
HU IE IT LI LU MC NL PL PT RO SE SI SK TR**

(43) Date of publication of application:
**03.05.2006 Bulletin 2006/18**

(73) Proprietor: **Nokia Siemens Networks GmbH & Co.
KG
81541 München (DE)**

(72) Inventor: **Schopp, Michael, Dr.
81827 München (DE)**

(56) References cited:
**WO-A-02/058295        DE-A1- 10 260 807
US-A- 5 052 029        US-A- 5 790 805**

**Description**

**Field of the invention**

The invention is used in communications networks where time synchronisation between a central clock and local clocks located on nodes distributed throughout the network is necessary.

**Summary of the invention**

Time synchronisation of distributed network nodes that are connected in a hub configuration to a global (master) clock through a shared off-the-shelf commercial switch, for example over a Gigabit (Gbit) Ethernet switch, is not precise enough, because the variability of transfer times between the involved elements is too high. This variability is caused by other traffic that is carried in the system which in turn causes delays to the time synchronisation data being transferred in a probabilistic fashion.

In order to overcome this problem alternative solutions have been implemented.

One such solution achieves precise time synchronisation by using dedicated infrastructure such as special circuits and dedicated links that are exclusively reserved for the exchange of timing data, between a global clock and distributed network nodes.

However, such a solution has a major drawback in that it is relatively expensive to implement and would mean that a higher initial investment would be necessary to build a network. In today's networking environment financial considerations do play an important role in the way networking environments are constructed.

Another solution is to modify the transport infrastructure (transport circuitry) of the system in order to reduce the variabilities of transfer times. This can be achieved for example in modifying the transport infrastructure to emulate a Time Division Multiple Access (TDMA) like operation which generates circuit-switched like connections between nodes with a constant transfer delay. Or in another example, by modifying the transport infrastructure in a way that traffic priorities can be assigned to the data being carried over the network. In this way, time synchronisation data is assigned the highest traffic priority and consequently such time synchronisation data will always be transmitted ahead of other lower priority traffic data which is pre-empted, thus ensuring a constant transfer delay.

However, no such features allowing for the modification of the transport infrastructure are available in today's cheap off-the-shelf commercially available systems, due to the fact that incorporating such features would cause the systems to be financially unattractive. Some systems do exist that have the traffic data prioritisation support feature but without the feature of pre-empting low priority traffic data, thus transfer times still remain variable.

Furthermore simple time synchronisation procedures are known in the art. In US patent 5,790,805 to Bantum, a simple time synchronisation procedure for synchronising client based clocks with a central clock on a server is disclosed. In this procedure, a client connects to a server and sends a synchronisation message. The client then receives a return synchronisation message from the server and computes a round trip interval time between sending and receiving, by sampling a hardware clock located on the client. The sending and receiving of synchronisation messages continues for a predetermined number of times, until the client receives a final synchronisation message from the server which includes the current local server time. The client then calculates the average one-way trip interval and adds that value to the received current local server time in order to provide the client with a reliable estimate of the local server time. By calculating the difference between the client's own local time and the calculated local server time, a baseline constant is derived which is used to calculate the local client clock at any moment in time.

WO 02/58295 discloses a real time clock setting procedure in a communications network. A real time clock request is sent from a network element to a management system. The time taken from the sending of the request to the receipt of the real time clock is compared with a predetermined threshold.If the elapsed time is less or equal to the threshold the clock of the network element is updated, if not a fresh request is sent.

DE 10260807 discloses a procedure for transmitting a time reference over a bus. A master clock has a register wherein an initial time value is stored. This time value is cyclically incremented. The master clock transmits the time value over the bus without a request for a time reference being received. A transmission circuit checks to see whether the communications medium is free and if so the current time value is read from the register and is transmitted.

However, such a procedure is not precise as it does not take into account any delays that occur in a network when sending and receiving synchronisation messages. Furthermore, it does not take into account the fact that changes can occur in the network topology that can affect the Round Trip Time (RTT) or elapsed time. When such network topology changes occur, the disclosed procedure does not allow for the RTT to be adapted dynamically, thus causing the local client clock to be desynchronised.

In view of the drawbacks that exist in the prior art, an objective of the present invention is to identify a method, a system and a node that can provide a more precise time synchronisation in today's networking environment without having to resort to technically complex and costly modifications of the transport infrastructure of systems that are currently available.

The present invention provides a method for clock synchronisation, in a communications network, between a central clock device having a central clock and at least one node having a local clock comprising the steps of:

(a) exchanging synchronisation messages between said at least one node and said central clock device, wherein a first local time corresponding to the time of transmitting a first synchronisation message is determined at said least one node and a second local time corresponding to a time of reception of a second synchronisation message is determined at said at least one node, the second synchronisation message comprising information regarding a central clock time at said central clock device;

(b) calculating at said least one node an elapsed time between said first local time and said second local time and storing said elapsed time, and further using said elapsed time in calculating at said least one node a difference between the local clock of said least one node and said central clock;

(c) updating the local clock in said at least one node by adding said calculated difference to the current time of said local clock.

The present invention further provides a system adapted to perform a clock synchronisation procedure, in a communications network, between a central clock device having a central clock and at least one node having a local clock comprising:

- clock synchronisation processors adapted to exchange synchronisation messages between said least one node and said central clock device, wherein the clock synchronisation processor on said least one node is further adapted to determine a first local time corresponding to a time of transmitting a first synchronisation message and to determine a second local time corresponding to a time of reception of a second synchronisation message, said second synchronisation message comprising information regarding a central clock time at said central clock device;

- calculating means located on said least one node adapted to calculate an elapsed time between said first local time and said second local time, said calculating means are further adapted to use said elapsed time in calculating a difference between the local clock of said least one node and said central clock;

- updating means located on said least one node adapted to update said local clock by adding said calculated difference to the current time of said local clock.

The present invention further provides a node having a local clock, adapted to perform a clock synchronisation procedure in a communications network comprising:

- a clock synchronisation processor adapted to exchange synchronisation messages between said node and a central clock device having a central clock, wherein the clock synchronisation processor on said node is further adapted to determine a first local time corresponding to a time of transmitting a first synchronisation message and to determine a second local time corresponding to a time of reception of a second synchronisation message, said second synchronisation message comprising information regarding a central clock time at said central clock device;

- calculating means adapted to calculate an elapsed time between said first local time and said second local time, said calculating means are further adapted to use said elapsed time in calculating a difference between the local clock and said central clock;

- updating means adapted to update said local clock by adding said calculated difference to the current time of said local clock.

Thus the above method, system and node are advantageous as they provide great benefits in a networking environment, in allowing for distributed network nodes to maintain their local clocks synchronised with a central clock, in a precise and exact manner.

Further optional advantages can be seen in the dependent claims, where the synchronisation messages transmitted have the same length and the same data rate in order to ensure that the transmission times of the synchronisation messages are constant. Additionally, delays experienced by the synchronisation messages are detected and are used in determining whether the clock synchronisation procedure is to be performed or terminated, ensuring an efficient procedure. Furthermore, these delays can be determined either as time values corresponding to the experienced delays or as indicators indicating that a delay occurred, allowing for a versatile clock synchronisation procedure. A yet another advantage of this invention is that a comparison between the values of calculated round trip times is performed and if a variance is detected, feedback to a network management centre is provided in the form of an alarm message, allowing for troubleshooting to be performed, thus maintaining an efficient network.

## Short description of the drawings

The present invention may be understood more readily, and various other aspects and features of the invention may become apparent from consideration of the following description and accompanying figures which are given by way of illustration only, and thus are not limitative of the present invention, and wherein:

Fig. 1, shows a typical distributed network comprising a central clock and nodes.

Fig. 2, shows the flow chart of the time synchronisation protocol located at a network node.

Fig. 3, shows the flow chart of the time synchronisation protocol located at a central clock.

## Detailed description of the invention

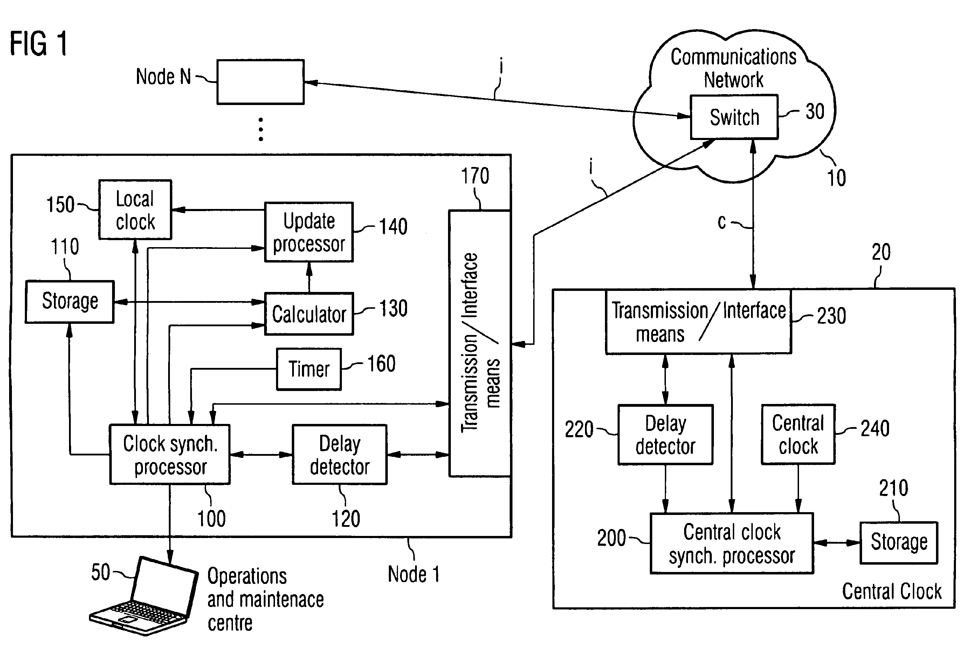

As can be seen in fig. 1, a typical distributed network consists of N nodes, e.g, node 1,..node N, that are connected to a central clock 20 and to other destinations through a switch 30. The terms "global clock", "master clock", "central clock" are synonymous and well known in the art. Each one of the N nodes 1,..N has a local clock 150 that requires time synchronisation with the more precise central clock. In order for this to be achieved, each node will communicate with the central clock via the switch 30. As it can be seen from fig.1 the central clock is connected to the switch through a dedicated link thus ensuring that only a small amount of traffic is carried on this link.

Each node, as can be seen in fig.1, comprises of a clock synchronisation processor 100 which executes the procedure from the side of the node, storage means 110 for storing the different time values necessary for performing the synchronisation procedure, a delay detector 120 for detecting whether synchronisation messages transmitted during the synchronisation procedure experience delays, a calculator 130 for performing the necessary calculations in the procedure, an update processor 140 for updating the local clock with the necessary values in order to synchronise the time on the local clock with that of the central clock 20, a local clock 150, a timer 160 for generating a random time to be used when the back-off procedure is performed, and transmission means/interface 170 for transmitting and receiving synchronisation messages.

The central clock 20, also shown in fig.1, comprises of a central clock synchronisation processor 200 which executes the procedure from the side of the central clock, storage means 210 for storing the different time values necessary for performing the synchronisation procedure, a delay detector 220 for detecting whether synchronisation messages transmitted during the synchronisation procedure experience delays, transmission means/interface 230 for transmitting and receiving synchronisation messages and a central clock 240 for providing a central time to each node.

In general, it can be assumed that the communication infrastructure is priority based and functions without any pre-emption of transmissions already in progress. Therefore the transfer time of a message over a link can be decomposed into the following components: W + T + D.

Where W is the waiting time before the transmission of the message begins.

Where T is the transmission time of the message, and is proportional to the length of the message and the transmission rate of the link.

Where D is the transmission delay, and is proportional to the length of the link and to the speed of the electromagnetic waves on the link.

W can be further decomposed into the following components: Waiting time until the end of the transmission of the message that is currently being transmitted on the link + Transmission time of all messages of the same or higher priority that arrived at an earlier time + Transmission time of all messages of higher priority that arrive during the waiting time W.

When a node sends a message to the central clock 20 and the central clock 20 replies with a message containing the current time GT at the central clock 20, the Round Trip Time RTT of the message exchange can be calculated in the following equation as follows:

$$RTT = W_i^{up} + W_c^{down} + W_c^{up} + W_i^{down} + T_i^{up} + T_c^{down} + T_c^{up} + T_i^{down} + D_i^{up} + D_c^{down} + D_c^{up} + D_i^{down} + S_{i\text{-to-}c} + S_{c\text{-to-}i}$$

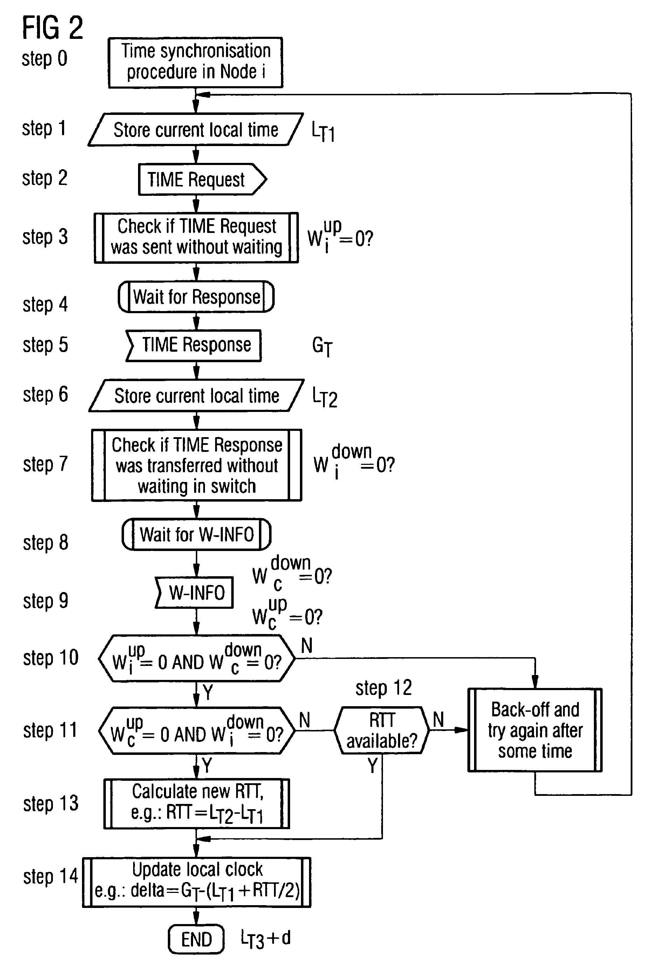

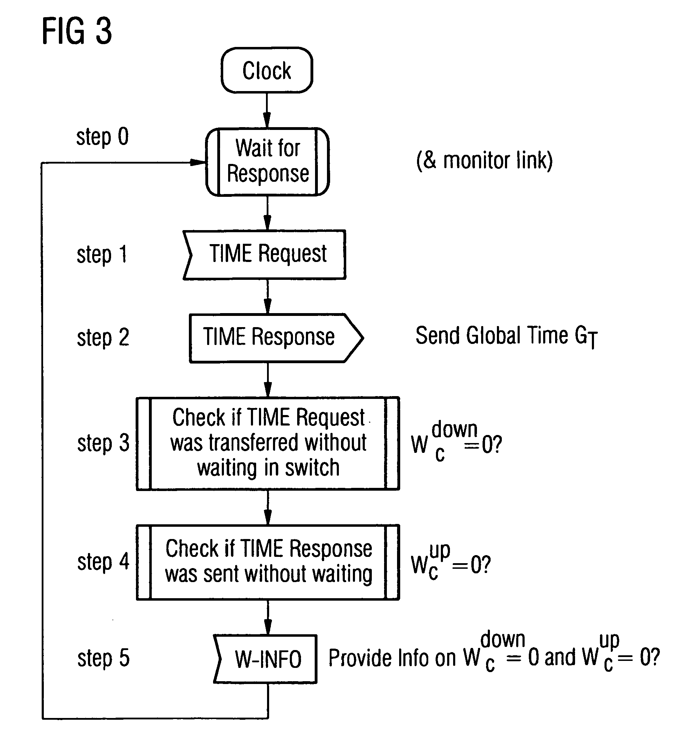

Where the indices of W, T and D indicate the corresponding link in fig.1 ($i$ = the link from the node to the switch 30; c = the link from the central clock to the switch 30; up = direction from node or clock towards the switch; down = direction from switch to node or clock).
The terms $S_{i\text{-to-}c}$ and $S_{c\text{-to-}i}$ give the switching delays within the switch.
Any terms in the equation that can be considered to be constant do not have a negative impact on the preciseness of the time synchronisation. Following this it can be assumed that the sum of all D is always constant, as are the terms $S_{i\text{-to-}c}$ and $S_{c\text{-to-}i}$.
The invention also ensures that the sum of all T in the equation is constant and that each direction contributes half of the sum by defining that all messages sent from a node to the clock and all messages sent from the clock to a node have the same equal length, and also by ensuring that the transmission rate of the links is the same in both directions (though it may be different on different links). The message can be defined to have a maximum length Lmax, depending now on the coding used, if the message after coding is shorter in length to Lmax then filling bits are added. An alternative to this is to create a dummy parameter which is added to all messages that are smaller to Lmax. The same transmission rate is ensured by selecting symmetric transmission technologies.
The inventive aspect of the invention exploits the fact that by monitoring a link, the monitoring instance such as a node or the central clock, can identify transmissions which did not experience any waiting time W before transmission. Therefore the following rule can be applied: Any transmission that is preceded by an idle state of the link did not experience any waiting time W.
Each node (node 1,..node N) in the network and the central clock 20 both monitor their respective links in both directions and identify transmissions that did not experience any waiting time before being transmitted on the particular link they are monitoring. In the proposed invention, the central clock 20 will transmit to a node an additional synchronisation message W-INFO that contains information relating to the time-delay that the node's time synchronisation request and the reply back to it experienced at the central clock 20. This is done for each individual node. Figures 2 and 3, show the corresponding algorithm of the time synchronisation protocol at a node and at the central clock. The procedure triggering the launching of the protocol is triggered by each node at regular intervals in order to keep their respective local clock synchronised with the central clock. In this way, changes in the network topology that affect the RTT can be detected and the RTT updated. Additionally, in the case of the RTT being updated, which would indicate that earlier synchronisations may have been wrong due to network configuration changes, a notification message such as an alarm, is triggered and sent to an operations and maintenance centre 50 to notify that a change in the network configuration has occurred.
Furthermore, in regularly performing the time synchronisation statistical information can be gathered such as the variance of the RTT, which can be used to determine the network load and the performance of the synchronisation procedure.
As stated above, each node monitors its respective link for transmissions that did not experience a delay in the following way.

(1) In the ideal case $W_i^{up}$, $W_c^{down}$, $W_c^{up}$, $W_i^{down}$ are all zero. This permits the RTT of a quasi unloaded system to be measured and to adjust the local clock according to this RTT and to the time information received from the central clock. For the purposes of the invention $W_i^{up}$, $W_c^{down}$, $W_c^{up}$, $W_i^{down}$ can either be time values corresponding to the experienced delays or indicators indicating that a delay occurred.

(2) In the second best case $W_i^{up}$, $W_c^{down}$ are both zero. This does not permit the RTT of a quasi unloaded system to be measured. However, if the RTT of a quasi unloaded system is already known from at least one previous measurement, as can be in the case when the start-up of the system takes place or in the case of (1) having occurred, the one way delay between a particular node (node 1,..node N) and the central clock can be estimated as RTT/2 and the local clock can be corrected according to the difference between the local time when sending the time request and the value of the global time that is reported back from the central clock minus RTT/2.

(3) If neither (1) nor (2) apply, the node will then use a back-off algorithm to determine a period of time that shall expire before the procedure is triggered again. The back-off time should be random and should increase each time $W_c^{down}$ or $W_c^{up}$ are not zero in order to avoid potential collisions of time synchronisation messages from different nodes on the link between the switch and the central clock. For the back-off algorithm, any type of back-off algorithm can be used, like for example the exponential back-off algorithm used in the Transport Control Protocol (TCP). The clock synchronisation processor 100 will use the timer 160 to generate the random time value used when performing the back-off.

Additional measures can be taken to control the probability of (1) and (2) occurring. These are:

- Time intervals between the triggering of the time synchronisation procedures in the nodes, should be long enough so as to create only a very light load on the link between the switch and the central clock, thus avoiding time synchronisation messages of different nodes interfering with each other.
- The triggering of the synchronisation procedure in the nodes is asynchronous thus avoiding that time synchronisation messages of different nodes interfering with each other and causing delays. This is assured by introducing randomness into the time intervals between two triggerings of the procedure.
- A node (node 1, ..node N) can ensure that $W_i^{up}$, is always zero by local measures. This can be affected by the node sending a message to the local interface a short time in advance of the time synchronisation procedure being triggered to go idle and to wait for the procedure to send a time synchronisation message. This measure increases the probability of (2) occurring.
- A node (node 1,..node N) can increase the probability of $W_i^{up}$ and $W_i^{down}$ being equal to zero by initiating the time synchronisation procedure when the amount of traffic in the system is low. This can occur when the link to the switch is currently idle or when the node does not expect any traffic from other sources. This measure increases the probability of (1) occurring.
- A node (node 1,..node N) can initiate the time synchronisation procedure at system start-up when no traffic is in the system in order to obtain a good estimate of RTT. This measure makes the system operational even when the probability of (1) occurring is relatively low in a regular system operation.

Based on the above description and with the aid of fig. 2 and 3, there follows a step by step analysis of the proposed procedure:

In step 0 of fig. 2, the time synchronisation procedure is triggered, this will ensure that in step 1 the time synchronisation procedure will check the local clock time and store the current local time LT1 value in memory. In step 2 a node will send a time synchronisation request message to the central clock. In step 3, the node will check whether the time synchronisation request message was sent without any delay at the local interface ($W_i^{up} = 0$?). In step 4, the procedure will cause the node to wait for a response to the message sent in step 2. In step 5, the node will receive a time response reply message from the central clock which will contain the global time $G_T$ value from the central clock and will then stored it. In step 6, the node will further store the local time value LT2 at the instant of reception of the time response message sent by the central clock (step 5). In step 7, the procedure will cause the node to check if the time response reply message was transferred without any delay in the switch ($W_i^{down} = 0$?). In step 8, the procedure will cause the node to wait for the central clock to send information W-INFO regarding any delays caused on the link between the central clock and the switch $W_c^{up}$, $W_c^{down}$. In step 9, the node receives this information and stores it in memory. Once the information has been received and stored, the procedure will perform a check, in step 10, to verify whether $W_i^{up}$ and $W_c^{down}$ are both equal to zero. If the result is negative N a back-off timer mechanism is triggered and the procedure returns to step 1. If the result is positive Y the procedure will go onto step 11, where another check is performed to verify whether $W_c^{up}$ and $W_i^{down}$ are both equal to zero. If the result is positive Y the procedure will go onto step 13 where the new RTT is calculated LT2- LT1 and the value stored in memory. In step 14 the procedure will then update the local clock modifying the local time based on the result of the calculation $G_T - (LT1+ RTT/2)$. Once the local clock has been updated the procedure will end, and it will return to step 0 until it is triggered to restart. If in step 11, the result is negative N the procedure will go onto step 12, where a check is performed to verify whether a RTT value is available. If such a value is not available then a back-off timer mechanism is triggered and the procedure returns to step 1. If such a value is available then the procedure will go onto step 14 in order to update the local clock.

In step 0 of fig. 3, the central clock monitors its link to the switch and waits for a time synchronisation request message to be received. In step 1, a time synchronisation request message is received. This will cause the procedure to go onto step 2, whereby a time response reply message from the central clock which will contain the global time $G_T$ value from the central clock will be sent back to the node that requested it. The length of the time response reply message is equal to the length of the time synchronisation request message received in step 1. In step 3, the central clock will check whether the time synchronisation request message suffered any delay in the switch ($W_c^{down} = 0$?). In step 4, the central clock will further check if the time response message suffered any delay at the local central clock interface ($W_c^{up} = 0$?). In step 5, the central clock will transmit this information $W_c^{down}$, $W_c^{up}$ to the node that requested the time synchronisation. The procedure will then return to step 0.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

**Claims**

1. A method for clock synchronisation, in a communications network (10), between a central clock device (20) having a central clock (240) and at least one node (node 1,..,node N) having a local clock (150) comprising the steps of:

> • exchanging synchronisation messages between said at least one node (node 1,..,node N) and said central clock device (20), wherein a first local time (LT1) corresponding to the time of transmitting a first synchronisation message is determined at said least one node (node 1,..,node N), said first synchronisation message being a time synchronisation request message, and a second local time (LT2) corresponding to a time of reception of a second synchronisation message is determined at said at least one node (node 1,..,node N), said second synchronisation message being a time response reply message, the second synchronisation message comprising information regarding a central clock time ($G_T$) at said central clock device (20);
> • determining at said at least one node (node 1, ..., node N) whether said synchronisation messages experienced a waiting time delay during said synchronisation message exchange;
> • calculating at said least one node (node 1,..,node N) an elapsed time between said first local time (LT1) and said second local time (LT2) and further using said elapsed time in calculating at said least one node (node 1,..,node N) a difference between the local clock (150) of said least one node (node 1, .., node N) and said central clock (240);

> the method being **characterised by**

> • updating the local clock (150) in said at least one node (node 1,..,node N) by adding said calculated difference to the current time of said local clock (150) upon said determination determining that said synchronisation messages are free of waiting time delay.

2. A method according to claim 1, wherein the synchronisation messages transmitted have an identical length and an identical data rate.

3. A method according to claim 1, wherein said at least one node (node 1,..,node N), upon determining said delay in the transmission of a first synchronisation message to the said central clock device (20), determines a first delay ($Wi^{up}$), and upon determining said delay in the transmission of the second synchronisation message containing said central clock time ($G_T$), determines a second delay ($Wi^{down}$).

4. A method according to claim 1 or 3, further comprising the step of said central clock device (20), upon determining a delay in the transmission of a first synchronisation message from said at least one node (node 1,..,node N), determines a third delay ($Wc^{down}$), and upon determining a delay in the transmission of said second synchronisation message containing said information regarding a central clock time ($G_T$), determines a fourth delay ($Wc^{up}$) and transmits said third and fourth delays ($Wc^{down}$, $Wc^{up}$) to said at least one node (node 1,..,node N) via a further synchronisation message (W-INFO).

5. A method according to any one of claims 3 to 4, wherein said at least one node (node 1,..,node N) further determines whether said determined delays ($Wi^{up}$, $Wi^{down}$, $Wc^{down}$, $Wc^{up}$) are equal to zero and upon determining that said determined delays ($Wi^{up}$, $Wi^{down}$, $Wc^{down}$, $Wc^{up}$) are equal to zero, updates the local clock (150).

6. A method according to claim 5, wherein said at least one node (node 1,..,node N) upon determining that said first and third delays ($Wi^{up}$, $Wc^{down}$) are not equal to zero, terminates said clock synchronisation and restarts said clock synchronisation at a later time using a random generated back-off timer (160) to generate said later time.

7. A method according to claim 5, wherein said at least one node (node 1,..,node N) upon determining that said first and third delays ($Wi^{up}$, $Wc^{down}$) are equal to zero and that said second and fourth delays ($Wi^{down}$, $Wc^{up}$) are not equal to zero, verifies whether said elapsed time exists from a previous clock synchronisation.

8. A method according to claim 7, wherein said at least one node (node 1,..,node N) upon verifying that said elapsed time exists uses this value in said calculation of said difference in the step of updating the local clock (150) in said at least one node (node 1, ..., node N), and upon verifying that said elapsed time does not exist terminates said clock synchronisation and restarts said clock synchronisation at a later time using a random generated back-off timer (160) to generate said later time.

9. A method according to claim 1, wherein the step of updating the local clock (150) in said at least one node (node 1, ..., node N) further comprises a step of comparing said calculated elapsed time to a previously calculated elapsed time and upon detecting a variance between said two elapsed times, transmitting an alarm to a network management centre (50).

10. A system in a communications network (10), comprising a central clock device (20) having a central clock (240) and at least one node (node 1,..,node N) having a local clock (150) comprising:

- clock synchronisation processors (100, 200) adapted to exchange synchronisation messages between said least one node (node 1,..,node N) and said central clock device (20), wherein the clock synchronisation processor (100) on said least one node (node 1,..,node N) is further adapted to determine a first local time (LT1) corresponding to a time of transmitting a first synchronisation message, said first synchronisation message being a time synchronisation request message, and to determine a second local time (LT2) corresponding to a time of reception of a second synchronisation message, said second synchronisation message being a time response reply message, said second synchronisation message comprising information regarding a central clock time ($G_T$) at said central clock device (20);
- detection means (120) adapted to determine whether said synchronisation messages experienced a waiting time delay during said synchronisation message exchange;
- calculating means (130) located on said at least one node (node 1,..,node N) adapted to calculate an elapsed time between said first local time (LT1) and said second local time (LT2), and upon performing said calculation adapted to store said elapsed time in storing means (110), said calculating means (130) being further adapted to use said stored elapsed time in calculating a difference between the local clock (150) of said least one node ((node 1,..,node N) and said central clock (240);
- updating means (140) located on said least one node (node 1,..,node N) adapted to update said local clock (150) by adding said calculated difference to the current time of said local clock (150),

**characterised in that** upon said detection means (120) determining that said synchronisation messages are free of waiting time delay said updating means (140) updates said local clock.

11. A system according to claim 10, wherein said detection means (120) are further adapted to determine a first delay ($Wi^{up}$) upon determining a delay in the transmission of a first synchronisation message to said central clock device (20), and to determine a second delay ($Wi^{down}$) upon determining a delay in the transmission of the second synchronisation message containing information regarding the central clock time ($G_T$).

12. A system according to claim 10 or 11, wherein said detection means (220) located on said central clock device (20) are adapted to determine a third delay ($Wc^{down}$) upon determining a delay in the transmission of the first synchronisation message from said at least one node (node 1,..,node N), and to determine a fourth delay ($Wc^{up}$) upon determining a delay in the transmission of said synchronisation message containing information regarding said central clock time ($G_T$) and wherein transmission means (230) located on said central clock device (20) are adapted to transmit said third and fourth delays ($Wc^{down}$, $Wc^{up}$) to said at least one node (node 1,..,node N) via a further synchronisation message (W-INFO).

13. A system according to any one of claims 11 to 12, wherein said detection means (120) located at said least one node (node 1,..,node N) are further adapted to determine whether said determined delays ($Wi^{up}$, $Wi^{down}$, $Wc^{down}$, $W_c^{up}$) are equal to zero, and upon detecting that said delays are equal to zero are further adapted to notify a clock synchronisation processor (100) located at said least one node (node 1,..,node N), said clock synchronisation processor (100) adapted to notify an update processor (140) to update said local clock (150).

14. A node (node 1,..node N) having a local clock (150), in a communications network (10) comprising:

- a clock synchronisation processor (100) adapted to exchange synchronisation messages between said node (node 1,..node N) and a central clock device (20) having a central clock (240), wherein the clock synchronisation processor (100) on said node (node 1,..node N) is further adapted to determine a first local time (LT1) corresponding to a time of transmitting a first synchronisation message, said first synchronisation message being a time synchronisation request message, and to determine a second local time (LT2) corresponding to a time of reception of a second synchronisation message from said central clock device (20), said second synchronisation message being a time response reply message, said second synchronisation message comprising information regarding a central clock time ($G_T$) at said central clock device (20);

- detection means (120) adapted to determine whether said synchronisation messages experienced a waiting time delay during said synchronisation message exchange;

- calculating means (130) adapted to calculate an elapsed time between said first local time (LT1) and said second local time (LT2), and upon performing said calculation adapted to store said elapsed time in storing means (110), said calculating means (130) being further adapted to use said stored elapsed time in calculating a difference between the local clock (150) and said central clock (240);

- updating means (140) adapted to update said local clock (150) by adding said calculated difference to the current time of said local clock (150),

**characterised in that** upon said detection means (120) determining that said synchronisation messages are free of waiting time delay said updating means (140) updates said local clock.

**Patentansprüche**

1. Verfahren zur Zeitgebersynchronisation in einem Kommunikationsnetz (10) zwischen einer zentralen Zeitgebereinrichtung (20) mit einem zentralen Zeitgeber (240) und mindestens einem Knoten (Knoten 1, ... Knoten N) mit einem lokalen Zeitgeber (150), mit den folgenden Schritten:

• Austauschen von Synchronisationsnachrichten zwischen dem mindestens einen Knoten (Knoten 1, ... Knoten N) und der zentralen Zeitgebereinrichtung (20), wobei in dem mindestens einen Knoten (Knoten 1, ... Knoten N) eine erste lokale Zeit (LT1) bestimmt wird, die der Zeit des Sendens einer ersten Synchronisationsnachricht entspricht, und in dem mindestens einen Knoten (Knoten 1, ... Knoten N) eine zweite lokale Zeit (LT2) bestimmt wird, die einer Zeit des Empfangs einer zweiten Synchronisationsnachricht entspricht, wobei die zweite Synchronisationsnachricht eine Zeitansprech-Antwortnachricht ist, wobei die zweite Synchronisationsnachricht Informationen bezüglich einer Zentralzeitgeberzeit ($G_T$) in der zentralen Zeitgebereinrichtung (20) umfaßt;

• in dem mindestens einen Knoten (Knoten 1, ... Knoten N) Bestimmen, ob die Synchronisationsnachrichten während des Synchronisationsnachrichtenaustauschs eine Wartezeitverzögerung erfahren haben;

• in dem mindestens einen Knoten (Knoten 1, ... Knoten N) Berechnen einer vergangenen Zeit zwischen der ersten lokalen Zeit (LT1) und der zweiten lokalen Zeit (LT2) und ferner Verwenden der vergangenen Zeit bei der Berechnung einer Differenz zwischen dem lokalen Zeitgeber (150) des mindestens einen Knotens (Knoten 1, ... Knoten N) und dem zentralen Zeitgeber (240) in dem mindestens einen Knoten;

**gekennzeichnet durch**

• Aktualisieren des lokalen Zeitgebers (150) in dem mindestens einen Knoten (Knoten 1, ... Knoten N) **durch** Addieren der berechneten Zeitdifferenz zu der aktuellen Zeit des lokalen Zeitgebers (150), wenn die Bestimmung bestimmt, daß die Synchronisationsnachrichten frei von Wartezeitverzögerungen sind.

2. Verfahren nach Anspruch 1, wobei die gesendeten Synchronisationsnachrichten eine identische Länge und eine identische Datenrate aufweisen.

3. Verfahren nach Anspruch 1, wobei der mindestens eine Knoten (Knoten 1, ... Knoten N) auf die Bestimmung der Verzögerung bei der Übertragung einer ersten Synchronisationsnachricht zu der zentralen Zeitgebereinrichtung (20) hin eine erste Verzögerung ($Wi^{up}$) bestimmt und auf die Bestimmung der Verzögerung bei der Übertragung der zweiten Synchronisationsnachricht, die die Zentralzeitgeberzeit ($G_T$) enthält, hin eine zweite Verzögerung ($Wi^{down}$) bestimmt.

4. Verfahren nach Anspruch 1 oder 3, ferner mit dem Schritt, daß die zentrale Zeitgebereinrichtung (20) auf die Bestimmung einer Verzögerung bei der Übertragung einer ersten Synchronisationsnachricht von dem mindestens einen Knoten (Knoten 1, ... Knoten N) hin eine dritte Verzögerung ($Wc^{down}$) bestimmt und auf die Bestimmung einer Verzögerung bei der Übertragung der zweiten Synchronisationsnachricht, die die Informationen bezüglich einer Zentralzeitgeberzeit ($G_T$) enthält, hin eine vierte Verzögerung ($Wc^{up}$) bestimmt und die dritte und vierte Verzögerung ($Wc^{down}$, $Wc^{up}$) über eine weitere Synchronisationsnachricht (W-INFO) zu dem mindestens einen Knoten (Knoten 1, ... Knoten N) sendet.

5. Verfahren nach einem der Ansprüche 3 bis 4, wobei der mindestens eine Knoten (Knoten 1, ... Knoten N) ferner bestimmt, ob die bestimmten Verzögerungen ($Wi^{up}$, $Wi^{down}$, $Wc^{down}$, $Wc^{up}$) gleich null sind und auf die Bestimmung hin, daß die bestimmten Verzögerungen ($Wi^{up}$, $Wi^{down}$, $Wc^{down}$, $Wc^{up}$) gleich null sind, den lokalen Zeitgeber (150) aktualisiert.

6. Verfahren nach Anspruch 5, wobei der mindestens eine Knoten (Knoten 1, ... Knoten N) auf die Bestimmung hin, daß die erste und dritte Verzögerung ($Wi^{up}$, $Wc^{down}$) nicht gleich null sind, die Zeitgebersynchronisation beendet und die Zeitgebersynchronisation zu einem späteren Zeitpunkt unter Verwendung eines zufallserzeugten Backoff-Timers (160) neustartet, um die spätere Zeit zu erzeugen.

7. Verfahren nach Anspruch 5, wobei der mindestens eine Knoten (Knoten 1, ... Knoten N) auf die Bestimmung hin, daß die erste und dritte Verzögerung ($Wi^{up}$, $Wc^{down}$) gleich null sind und daß die zweite und vierte Verzögerung ($Wi^{down}$, $Wc^{up}$) nicht gleich null sind, aus einer vorherigen Zeitgebersynchronisation verifiziert, ob die vergangene Zeit existiert.

8. Verfahren nach Anspruch 7, wobei der mindestens eine Knoten (Knoten 1, ... Knoten N) auf das Verifizieren hin, daß die vergangene Zeit existiert, diesen Wert bei der Berechnung der Differenz in dem Schritt des Aktualisierens des lokalen Zeitgebers (150) in dem mindestens einen Knoten (Knoten 1, ... Knoten N) verwendet und auf das Verifizieren hin, daß die vergangene Zeit nicht existiert, die Zeitgebersynchronisation beendet und die Zeitgebersynchronisation zu einem späteren Zeitpunkt unter Verwendung eines zufallserzeugten Backup-Timers (160) neustartet, um die spätere Zeit zu erzeugen.

9. Verfahren nach Anspruch 1, wobei der Schritt des Aktualisierens des lokalen Zeitgebers (150) in dem mindestens einen Knoten (Knoten 1, ... Knoten N) ferner einen Schritt umfaßt, die vergangene Zeit mit einer zuvor berechneten vergangenen Zeit zu vergleichen und bei Detektion einer Varianz zwischen den beiden vergangenen Zeiten einen Alarm einer Netzverwaltungszentrale (50) zu senden.

10. System in einem Kommunikationsnetz (10) mit einer zentralen Zeitgebereinrichtung (20) mit einem zentralen Zeitgeber (240) und mindestens einem Knoten (Knoten 1, ... Knoten N) mit einem lokalen Zeitgeber (150), umfassend:

   - Zeitgebersynchronisationsprozessoren (100, 200), die dafür ausgelegt sind, Synchronisationsnachrichten zwischen dem mindestens einen Knoten (Knoten 1, ... Knoten N) und der zentralen Zeitgebereinrichtung (20) auszutauschen, wobei der Zeitgebersynchronisationsprozessor (100) auf dem mindestens einen Knoten (Knoten 1, ... Knoten N) ferner dafür ausgelegt ist, eine erste lokale Zeit (LT1) zu bestimmen, die einer Zeit des Sendens einer ersten Synchronisationsnachricht entspricht, wobei die erste Synchronisationsnachricht eine Zeitsynchronisationsanforderungsnachricht ist, und eine zweite lokale Zeit (LT2) zu bestimmen, die einer Zeit des Empfangens einer zweiten Synchronisationsnachricht entspricht, wobei die zweite Synchronisationsnachricht eine Zeitansprech-Antwortnachricht ist, wobei die zweite Synchronisationsnachricht Informationen bezüglich einer Zentralzeitgeberzeit ($G_T$) in der zentralen Zeitgebereinrichtung (20) umfaßt;
   - Detektionsmittel (120), die dafür ausgelegt sind, zu bestimmen, ob die Synchronisationsnachrichten während des Synchronisationsnachrichtenaustauschs eine Wartezeitverzögerung erfahren haben;
   - Berechnungsmittel (130), die sich auf dem mindestens einen Knoten (Knoten 1, ... Knoten N) befinden und dafür ausgelegt sind, eine vergangene Zeit zwischen der ersten lokalen Zeit (LT1) und der zweiten lokalen Zeit (LT2) zu berechnen und bei der Durchführung der Berechnung dafür ausgelegt sind, die vergangene Zeit in Speichermitteln (110) zu speichern, wobei die Berechnungsmittel (130) ferner dafür ausgelegt sind, die gespeicherte vergangene Zeit bei der Berechnung einer Differenz zwischen dem lokalen Zeitgeber (150) des mindestens einen Knotens (Knoten 1, ... Knoten N) und dem zentralen Zeitgeber (240) zu verwenden;
   - Aktualisierungsmittel (140), die sich auf dem mindestens einen Knoten (Knoten 1, ... Knoten N) befinden und dafür ausgelegt sind, den lokalen Zeitgeber (150) zu aktualisieren, indem die berechnete Differenz zu der aktuellen Zeit des lokalen Zeitgebers (150) addiert wird,

   **dadurch gekennzeichnet, daß** die Aktualisierungsmittel (140) den lokalen Zeitgeber aktualisieren, wenn die Detektionsmittel (120) bestimmen, daß die Synchronisationsnachrichten frei von Wartezeitverzögerung sind.

11. System nach Anspruch 10, wobei die Detektionsmittel (120) ferner dafür ausgelegt sind, eine erste Verzögerung ($Wi^{up}$) zu bestimmen, wenn eine Verzögerung bei der Übertragung einer ersten Synchronisationsnachricht zu der zentralen Zeitgebereinrichtung (20) bestimmt wird, und eine zweite Verzögerung (Wi$^{down}$) zu bestimmen, wenn eine Verzögerung bei der Übertragung der zweiten Synchronisationsnachricht, die Informationen bezüglich der Zentralzeitgeberzeit (G$_T$) enthält, bestimmt wird.

12. System nach Anspruch 10 oder 11, wobei die Detektionsmittel (120), die sich auf der zentralen Zeitgebereinrichtung (20) befinden, dafür ausgelegt sind, eine dritte Verzögerung (Wc$^{down}$) zu bestimmen, wenn eine Verzögerung bei der Übertragung der ersten Synchronisationsnachricht von dem mindestens einen Knoten (Knoten 1, ... Knoten N) bestimmt wird, und eine vierte Verzögerung (Wc$^{up}$) zu bestimmen, wenn eine Verzögerung bei der Übertragung der Synchronisationsnachricht, die Informationen bezüglich der Zentralzeitgeberzeit (G$_T$) enthält, bestimmt wird, und wobei Übertragungsmittel (230), die sich auf der zentralen Zeitgebereinrichtung (20) befinden, dafür ausgelegt sind, die dritte und vierte Verzögerung (Wc$^{down}$, Wc$^{up}$) über eine weitere Synchronisationsnachricht (W-INFO) zu dem mindestens einen Knoten (Knoten 1, ... Knoten N) zu senden.

13. System nach einem der Ansprüche 10 bis 12, wobei die Detektionsmittel (120), die sich in dem mindestens einen Knoten (Knoten 1, ... Knoten N) befinden, ferner dafür ausgelegt sind, zu bestimmen, ob die bestimmten Verzögerungen (Wi$^{up}$, Wi$^{down}$, Wc$^{down}$, Wc$^{up}$) gleich null sind, und auf eine Bestimmung hin, daß die Verzögerungen gleich null sind, ferner dafür ausgelegt sind, einen in dem mindestens einen Knoten (Knoten 1, ... Knoten N) befindlichen Zeitgebersynchronisationsprozessor (100) zu benachrichtigen, wobei der Zeitgebersynchronisationsprozessor (100) dafür ausgelegt ist, einen Aktualisierungsprozessor (140) zu benachrichtigen, um den lokalen Zeitgeber (150) zu aktualisieren.

14. Knoten (Knoten 1, ... Knoten N) mit einem lokalen Zeitgeber (150) in einem Kommunikationsnetz (10), umfassend:

- einen Zeitgebersynchronisationsprozessor (100), der dafür ausgelegt ist, Synchronisationsnachrichten zwischen dem Knoten (Knoten 1, ... Knoten N) und einer zentralen Zeitgebereinrichtung (20) mit einem zentralen Zeitgeber (240) auszutauschen, wobei der Zeitgebersynchronisationsprozessor (100) auf dem Knoten (Knoten 1, ... Knoten N) ferner dafür ausgelegt ist, eine erste lokale Zeit (LT1) zu bestimmen, die einer Zeit des Sendens einer ersten Synchronisationsnachricht entspricht, wobei die erste Synchronisationsnachricht eine Zeitsynchronisationsanforderungsnachricht ist, und eine zweite lokale Zeit (LT2) zu bestimmen, die einer Zeit des Empfangs einer zweiten Synchronisationsnachricht von der zentralen Zeitgebereinrichtung (20) entspricht, wobei die zweite Synchronisationsnachricht eine Zeitansprech-Antwortnachricht ist, wobei die zweite Synchronisationsnachricht Informationen bezüglich einer Zentralzeitgeberzeit (G$_T$) in der zentralen Zeitgebereinrichtung (20) umfaßt;
- Detektionsmittel (120), die dafür ausgelegt sind, zu bestimmen, ob die Synchronisationsnachrichten während des Synchronisationsnachrichtenaustauschs eine Wartezeitverzögerung erfahren haben;
- Berechnungsmittel (130), die dafür ausgelegt sind, eine vergangene Zeit zwischen der ersten lokalen Zeit (LT1) und der zweiten lokalen Zeit (LT2) zu berechnen und auf die Durchführung der Berechnung hin dafür ausgelegt sind, die vergangene Zeit in Speichermitteln (110) zu speichern, wobei die Berechnungsmittel (130) ferner dafür ausgelegt sind, die gespeicherte vergangene Zeit bei der Berechnung einer Differenz zwischen dem lokalen Zeitgeber (150) und dem zentralen Zeitgeber (240) zu verwenden;
- Aktualisierungsmittel (140), die dafür ausgelegt sind, den lokalen Zeitgeber (150) durch Addieren der berechneten Differenz zu der aktuellen Zeit des lokalen Zeitgebers (150) zu aktualisieren,

**dadurch gekennzeichnet, daß** die Aktualisierungsmittel (140) den lokalen Zeitgeber aktualisieren, wenn die Detektionsmittel (120) bestimmen, daß die Synchronisationsnachrichten frei von Wartezeitverzögerung sind.

**Revendications**

1. Procédé de synchronisation d'horloge, dans un réseau de communication (10), entre un dispositif d'horloge centrale (20) comprenant une horloge centrale (240) et au moins un nœud (nœud 1, ..., nœud N) comprenant une horloge locale (150), comprenant les étapes consistant à :

• échanger des messages de synchronisation entre ledit au moins un nœud (nœud 1, ..., nœud N) et ledit dispositif d'horloge centrale (20), dans lequel un premier temps local (LT1) correspondant au temps de transmission d'un premier message de synchronisation est déterminé au niveau dudit au moins un nœud (nœud 1, ..., nœud N), ledit premier message de synchronisation étant un message de requête de synchronisation de temps, et un second temps local (LT2) correspondant à un temps de réception d'un second message de synchronisation est déterminé au niveau dudit au moins un nœud (nœud 1, ..., nœud N), ledit second message de synchronisation étant un message de réponse contenant une réponse temporelle, le second message de synchronisation comprenant une information concernant un temps d'horloge centrale ($G_T$) au niveau dudit dispositif d'horloge centrale (20) ;

• déterminer, au niveau dudit au moins un noeud (noeud 1, ..., noeud N), si lesdits messages de synchronisation ont subi un retard d'attente pendant l'échange desdits messages de synchronisation ;

• calculer, au niveau dudit au moins un noeud (noeud 1, ..., noeud N), un temps écoulé entre ledit premier temps local (LT1) et ledit second temps local (LT2) et utiliser, en outre, ledit temps écoulé dans le calcul, au niveau dudit au moins un noeud (noeud 1, ..., noeud N), d'une différence entre l'horloge locale (150) dudit au moins un noeud (noeud 1, ..., noeud N) et ladite horloge centrale (240) ;

le procédé étant **caractérisé par**

• une mise à jour de l'horloge locale (150) dans ledit au moins un noeud (noeud 1, ..., noeud N) en ajoutant ladite différence calculée au temps actuel de ladite horloge locale (150) lorsque ladite détermination a déterminé que lesdits messages de synchronisation n'ont subi aucun retard d'attente.

2. Procédé selon la revendication 1, dans lequel les messages de synchronisation transmis ont une longueur identique et un débit de données identique.

3. Procédé selon la revendication 1, dans lequel ledit au moins un noeud (noeud 1, ..., noeud N) détermine, après la détermination dudit retard de transmission d'un premier message de synchronisation audit dispositif d'horloge centrale (20), un premier retard ($W_i^{up}$) et, après la détermination dudit retard de transmission du second message de synchronisation contenant ledit temps d'horloge centrale ($G_T$), un deuxième retard ($W_i^{down}$).

4. Procédé selon la revendication 1 ou 3, comprenant, en outre, l'étape dans laquelle ledit dispositif d'horloge centrale (20) détermine, après la détermination d'un retard de transmission d'un premier message de synchronisation depuis ledit au moins un noeud (noeud 1, ..., noeud N), un troisième retard ($W_c^{down}$) et, après la détermination d'un retard de transmission dudit second message de synchronisation contenant ladite information concernant un temps d'horloge centrale ($G_T$), un quatrième retard ($W_c^{up}$), et transmet lesdits troisième et quatrième retards ($W_c^{down}$, $W_c^{up}$) audit au moins un noeud (noeud 1, ..., noeud N) par le biais d'un nouveau message de synchronisation (W-INFO).

5. Procédé selon l'une quelconque des revendications 3 à 4, dans lequel ledit au moins un noeud (noeud 1, ..., noeud N) détermine, en outre, si lesdits retards déterminés ($W_i^{up}$, $W_i^{down}$, $W_c^{down}$, $W_c^{up}$) sont égaux à zéro et, s'il détermine que lesdits retards déterminés ($W_i^{up}$, $W_i^{down}$, $W_c^{down}$, $W_c^{up}$) sont égaux à zéro, met à jour l'horloge locale (150).

6. Procédé selon la revendication 5, dans lequel ledit au moins un noeud (noeud 1, ..., noeud N), ayant déterminé que lesdits premier et troisième retards ($W_i^{up}$, $W_c^{down}$) ne sont pas égaux à zéro, met fin à la synchronisation d'horloge et redémarre ladite synchronisation d'horloge à un instant ultérieur en utilisant un générateur de back-off à génération aléatoire (160) pour générer ledit instant ultérieur.

7. Procédé selon la revendication 5, dans lequel ledit au moins un noeud (noeud 1, ..., noeud N), ayant déterminé que lesdits premier et troisième retards ($W_i^{up}$, $W_c^{down}$) sont égaux à zéro et que lesdits deuxième et quatrième retards ($W_i^{down}$, $W_c^{up}$) ne sont pas égaux à zéro, vérifie si ledit temps écoulé existe depuis une synchronisation d'horloge antérieure.

8. Procédé selon la revendication 7, dans lequel ledit au moins un noeud (noeud 1, ..., noeud N), s'il a vérifié que ledit temps écoulé existe, utilise cette valeur dans ledit calcul de ladite différence dans l'étape de mise à jour de l'horloge locale (150) dans ledit au moins un noeud (noeud 1, ..., noeud N) et, s'il a vérifié que ledit temps écoulé n'existe pas, met fin à ladite synchronisation d'horloge et redémarre ladite synchronisation d'horloge à un instant ultérieur en utilisant un générateur de temporisation de back-off aléatoire (160) pour générer ledit instant ultérieur.

9. Procédé selon la revendication 1, dans lequel l'étape de mise à jour de l'horloge locale (150) dans ledit au moins un noeud (noeud 1, ..., noeud N) comprend, en outre, une étape de comparaison dudit temps écoulé calculé avec un temps écoulé calculé antérieurement et, si une variante est détectée entre lesdits deux temps écoulés, de transmission d'une alarme à un centre de gestion de réseau (50).

10. Système dans un réseau de communication (10), comprenant un dispositif d'horloge centrale (20) comprenant une horloge centrale (240) et au moins un noeud (noeud 1, ..., noeud N) comprenant une horloge locale (150), comprenant :

- des processeurs de synchronisation d'horloge (100, 200) adaptés pour échanger des messages de synchronisation entre ledit au moins un noeud (noeud 1, ..., noeud N) et ledit dispositif d'horloge centrale (20), dans lequel le processeur de synchronisation d'horloge (100) sur ledit au moins un noeud (noeud 1, ..., noeud N) est adapté, en outre, pour déterminer un premier temps local (LT1) correspondant à un temps de transmission d'un premier message de synchronisation, ledit premier message de synchronisation étant un message de requête de synchronisation de temps, et pour déterminer un second temps local (LT2) correspondant à un temps de réception d'un second message de synchronisation, ledit second message de synchronisation étant un message de réponse contenant une réponse temporelle, ledit second message de synchronisation comprenant une information concernant un temps d'horloge centrale ($G_T$) au niveau dudit dispositif d'horloge centrale (20) ;
- un moyen de détection (120) adapté pour déterminer si lesdits messages de synchronisation ont subi un retard d'attente pendant l'échange desdits messages de synchronisation ;
- un moyen de calcul (130) situé sur ledit au moins un noeud (noeud 1, ..., noeud N), adapté pour calculer un temps écoulé entre ledit premier temps local (LT1) et ledit second temps local (LT2) et, après avoir procédé audit calcul, adapté pour enregistrer ledit temps écoulé dans un moyen d'enregistrement (110), ledit moyen de calcul (130) étant adapté, en outre, pour utiliser ledit temps écoulé enregistré dans le calcul d'une différence entre l'horloge locale (150) dudit au moins un noeud (noeud 1, ..., noeud N) et ladite horloge centrale (240) ;
- un moyen de mise à jour (140) situé sur ledit au moins un noeud (noeud 1, ..., noeud N), adapté pour mettre à jour ladite horloge locale (150) en ajoutant ladite différence calculée au temps actuel de ladite horloge locale (150),

**caractérisé en ce que**, lorsque ledit moyen de détection (120) a déterminé que lesdits messages de synchronisation n'ont subi aucun retard d'attente, ledit moyen de mise à jour (140) met à jour ladite horloge locale.

11. Système selon la revendication 10, dans lequel ledit moyen de détection (120) est adapté, en outre, pour déterminer un premier retard ($W_i^{up}$) lorsqu'un retard de transmission d'un premier message de synchronisation audit dispositif d'horloge centrale (20) a été déterminé et pour déterminer un deuxième retard ($W_i^{down}$) lorsqu'un retard de transmission du second message de synchronisation contenant une information concernant le temps d'horloge centrale ($G_T$) a été déterminé.

12. Système selon la revendication 10 ou 11, dans lequel ledit moyen de détection (220) situé sur ledit dispositif d'horloge centrale (20) est adapté pour déterminer un troisième retard ($W_c^{down}$) lorsqu'un retard de transmission du premier message de synchronisation provenant dudit au moins un noeud (noeud 1, ..., noeud N) a été déterminé et pour déterminer un quatrième retard ($W_c^{up}$) lorsqu'un retard de transmission dudit message de synchronisation contenant une information concernant ledit temps d'horloge centrale ($G_T$) a été déterminé, et dans lequel un moyen de transmission (230) situé sur ledit dispositif d'horloge centrale (20) est adapté pour transmettre lesdits troisième et quatrième retards ($W_c^{down} W_c^{up}$) audit au moins un noeud (noeud 1, ..., noeud N) par le biais d'un nouveau message de synchronisation (W-INFO).

13. Système selon l'une quelconque des revendications 11 à 12, dans lequel ledit moyen de détection (120) situé au niveau dudit au moins un noeud (noeud 1, ..., noeud N) est adapté, en outre, pour déterminer si lesdits retards déterminés ($W_i^{up}$, $W_i^{down}$, $W_c^{down}$, $W_c^{up}$) sont égaux à zéro et, s'il détecte que lesdits retards sont égaux à zéro, est adapté, en outre, pour avertir un processeur de synchronisation d'horloge (100) situé au niveau dudit au moins un noeud (noeud 1, ..., noeud N), ledit processeur de synchronisation d'horloge (100) étant adapté pour notifier à un processeur de mise à jour (140) qu'il faut mettre à jour ladite horloge locale (150).

14. Noeud (noeud 1, ..., noeud N) comprenant une horloge locale (150), dans un réseau de communication (10), comprenant :

- un processeur de synchronisation d'horloge (100) adapté pour échanger des messages de synchronisation entre ledit noeud (noeud 1, ..., noeud N) et un dispositif d'horloge centrale (20) comprenant une horloge centrale (240), dans lequel le processeur de synchronisation d'horloge (100) sur ledit noeud (noeud 1, ..., noeud N) est adapté, en outre, pour déterminer un premier temps local (LT1) correspondant à un temps de transmission d'un premier message de synchronisation, ledit premier message de synchronisation étant un message de requête de synchronisation de temps, et pour déterminer un second temps local (LT2) correspondant à un temps de réception d'un second message de synchronisation dudit dispositif d'horloge centrale (20), ledit second message de synchronisation étant un message de réponse contenant une réponse temporelle, ledit second message de synchronisation comprenant une information concernant un temps d'horloge centrale ($G_T$) au niveau dudit dispositif d'horloge centrale (20) ;

- un moyen de détection (120) adapté pour déterminer si lesdits messages de synchronisation ont subi un retard d'attente pendant l'échanges desdits messages de synchronisation ;

- un moyen de calcul (130) adapté pour calculer un temps écoulé entre ledit premier temps local (LT1) et ledit second temps local (LT2) et, ayant procédé audit calcul, adapté pour enregistrer ledit temps écoulé dans un moyen d'enregistrement (110), ledit moyen de calcul (130) étant adapté, en outre, pour utiliser ledit temps écoulé enregistré dans le calcul d'une différence entre l'horloge locale (150) et ladite horloge centrale (240) ;

- un moyen de mise à jour (140) adapté pour mettre à jour ladite horloge locale (150) en ajoutant ladite différence calculée au temps actuel de ladite horloge locale (150),

**caractérisé en ce que**, lorsque ledit moyen de détection (120) a déterminé que lesdits messages de synchronisation n'ont subi aucun retard d'attente, ledit moyen de mise à jour (140) met à jour ladite horloge locale.

FIG 1

# FIG 2

step 0 — Time synchronisation procedure in Node i

step 1 — Store current local time — $L_{T1}$

step 2 — TIME Request

step 3 — Check if TIME Request was sent without waiting — $W_i^{up} = 0?$

step 4 — Wait for Response

step 5 — TIME Response — $G_T$

step 6 — Store current local time — $L_{T2}$

step 7 — Check if TIME Response was transferred without waiting in switch — $W_i^{down} = 0?$

step 8 — Wait for W-INFO

step 9 — W-INFO — $W_c^{down} = 0?$ — $W_c^{up} = 0?$

step 10 — $W_i^{up} = 0$ AND $W_c^{down} = 0?$ — N

step 11 — $W_c^{up} = 0$ AND $W_i^{down} = 0?$ — N

step 12 — RTT available? — N — Y

Back-off and try again after some time

step 13 — Calculate new RTT, e.g.: $RTT = L_{T2} - L_{T1}$

step 14 — Update local clock e.g.: $delta = G_T - (L_{T1} + RTT/2)$

END — $L_{T3} + d$

# FIG 3

```
                    ┌──────────┐
                    │  Clock   │
                    └────┬─────┘
                         │
                         ▼
step 0          ╔════════════════╗
    ────────────▶║  Wait for      ║        (& monitor link)
   │            ║  Response      ║
   │            ╚═══════╤════════╝
   │                    │
   │                    ▼
   │        ┌────────────────────┐
step 1      │   TIME Request     ╲
   │        └──────────┬─────────┘
   │                   │
   │                   ▼
step 2      ╱────────────────────┐
   │        │   TIME Response    │       Send Global Time $G_T$
   │        ╲──────────┬─────────┘
   │                   │
   │                   ▼
   │      ╔════════════════════════╗
   │      ║  Check if TIME Request ║
step 3    ║  was transferred without║    $W_c^{down} = 0?$
   │      ║  waiting in switch     ║
   │      ╚═══════════╤════════════╝
   │                  │
   │                  ▼
   │      ╔════════════════════════╗
step 4    ║  Check if TIME Response ║    $W_c^{up} = 0?$
   │      ║  was sent without waiting║
   │      ╚═══════════╤════════════╝
   │                  │
   │                  ▼
step 5      ╱─────────────┐
   │        │   W-INFO    │   Provide Info on $W_c^{down} = 0$ and $W_c^{up} = 0?$
   │        ╲─────┬───────┘
   │              │
   └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5790805 A, Bantum
- WO 0258295 A

- DE 10260807